# FASCICULE DE BREVET EUROPEEN

(11) **EP 0 383 369 B1**
(45) Date de publication et mention de la délivrance du brevet: **03.11.1993**
(21) Numéro de dépôt: 90107043.3
(22) Date de dépôt: 28.04.1986
(51) Int. Cl.: F16K 31/163, F16H 21/44

(54) **Combinaison d'une vanne à arbre rotatif et un organe de commande étant reliés entre eux par un dispositif à leviers**
Anordnung bestehend aus einer Drehklappe und einem Antriebsorgan, verbunden durch ein Hebelgestänge
Combination of a rotating valve and a driving gear being connected by a device provided with levers

(30) Priorité: 10.05.1985 FR 8507083
(43) Date de publication de la demande: 22.08.1990
(62) Demande divisionnaire de: 86902436.4
(73) Titulaire: DRESSER INDUSTRIES, INC., Dallas Texas 75221 (US)
(72) Inventeur: Sauze, Bernard, F-42290 Sorbiers (FR)
(74) Mandataire: Le Guen, Louis François

(56) Documents cités:
- GB-A- 2 005 373
- US-A- 3 927 573
- MACHINE DESIGN. vol. 35, no. 11, 09 mai 63, CLEVELAND US page 219 "Scanning the field for ideas"
- PATENT ABSTRACTS OF JAPAN vol. 7, no. 221 (M-246)(1366) 30 septembre 1983, & JP-A-58 113681 (TOMOE GIJUTSUKENKYUSHO K.K.) 06 juillet 1983

## Description

La présente invention concerne une combinaison d'une vanne à arbre rotatif et d'un organe de commande, comportant un dispositif de liaison à leviers entre l'arbre rotatif de la vanne à arbre rotatif et l'organe de commande du débit et\ou du couple de manoeuvre de ladite vanne, comprenant un premier levier dont une extrémité est couplée de manière rotative audit organe de commande et un second levier dont une extrémité est solidaire dudit arbre rotatif, le premier levier étant relié au second levier par un élément de couplage.

Dans le document US-A-3 927 573, il est décrit un dispositif de liaison à leviers du type mentionné ci-dessus et dans lequel la broche de couplage entre le premier levier et l'organe de commande, par l'intermédiaire de la tige de ce dernier, coulisse entre deux rails parallèles. En ce qui concerne cette structure connue de dispositif de liaison, on doit modifier la course de l'organe d'actionnement, par déplacement de deux butées de fin de course, chaque fois que l'on désire modifier l'angle de rotation de l'arbre rotatif de la vanne rotative.

L'objectif de la présente invention consiste à perfectionner un dispositif de liaison à leviers du type mentionné dans l'introduction des présentes de façon qu'une modification de l'angle de rotation de l'arbre rotatif soit possible, sans qu'il soit nécessaire de modifier, voire de limiter, la course de l'organe d'actionnement.

Cet objectif est atteint par l'invention en ce que l'élément de couplage entre les deux leviers peut être déplacé dans une coulisse afin de modifier ledit angle de rotation tout en gardant la course de l'organe d'actionnement inchangée.

Ce perfectionnement suivant l'invention présente l'avantage de permettre une adaptation exacte de l'angle de rotation nécessaire de l'arbre rotatif d'une vanne rotative sans modification, ni échange de l'organe d'actionnement, en déplaçant l'élément de couplage reliant les deux leviers dans la coulisse réalisée dans un des leviers. Ce perfectionnement suivant l'invention permet ainsi de régler ou de modifier les caractéristiques de débit d'une vanne, et ceci sans modifier les caractéristiques de l'organe d'actionnement. En outre, le dispositif de liaison à leviers suivant l'invention permet d'éliminer sans problème des défauts apparus suite à un surdimensionnement ou sousdimensionnement du débit, soit à l'usine du fabricant soit sur des vannes déjà installées. Enfin, le dispositif de liaison à leviers suivant l'invention peut être utilisé pour des vannes de dimensions différentes dont les arbres rotatifs ont des angles de rotation différents.

Les objectifs de l'invention sont atteints par la mise en oeuvre des combinaisons de moyens définies dans les revendications complétant la présente description.

Le dessin joint montre un exemple de réalisation du dispositif de liaison à leviers suivant l'invention. Dans ce dessin:
la Fig. 1 est une coupe transversale du dispositif de liaison à leviers monté sur une vanne, et
la Fig. 2 est une vue, suivant la flèche A de la Fig. 1.

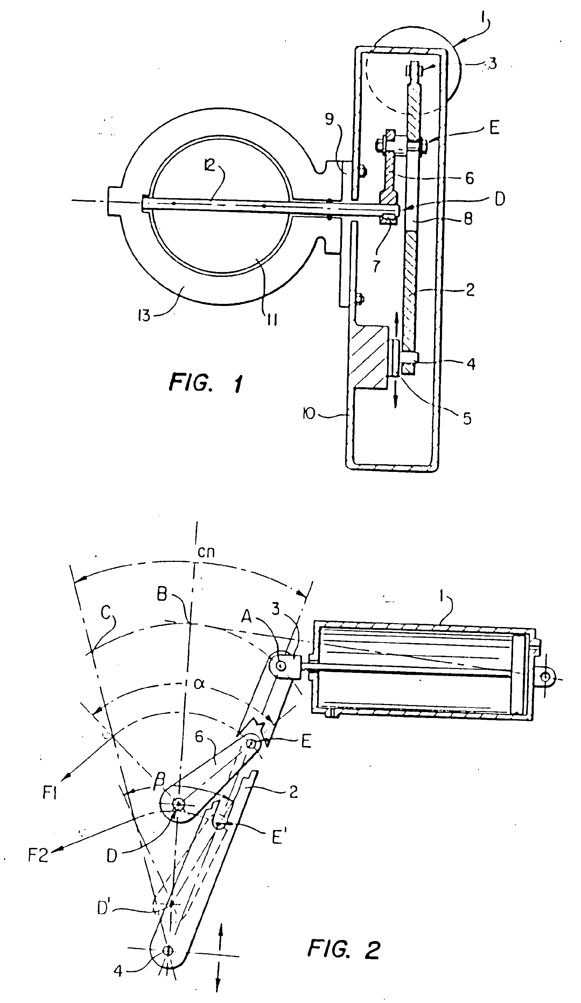

L'organe d'actionnement 1, un vérin par exemple, est relié de façon à pouvoir effectuer un mouvement rotatif, par l'intermédiaire d'une chape 3 mobile dans les deux sens, à une des extrémités d'un premier levier 2. L'autre extrémité de ce levier 2 comporte un axe de rotation 4 couplé à une glissière 5. Cette glissière 5 permet un déplacement linéaire de l'axe de rotation 4 dans le sens des flèches de la Fig. 1, lorsque l'autre extrémité du levier 2 pivote sous l'action de la chape 3 qui effectue un mouvement passant par les points A, B et C.

Le levier primaire 2 est relié, au point E par l'intermédiaire d'un élément de couplage, à un second levier 6 dont l'autre extrémité est solidaire, par l'intermédiaire d'une clavette 7, de l'arbre rotatif 12 de la vanne, au point D. L'élément de couplage reliant les deux leviers 2 et 6 au point E peut être déplacé dans une rainure 8 qui, dans cet exemple de réalisation, est réalisée dans le levier 2.

Le dispositif de liaison à leviers décrit ci-dessus, entre l'organe d'actionnement 1 et l'arbre 12 de la vanne 13 est disposé dans un boîtier 10 qui est relié à la cage de la soupape 13 au moyen d'une plaque intermédiaire 9.

Lorsqu'on déplace l'élément de couplage formant le point E dans la rainure 8 (en déplaçant en même temps la plaque intermédiaire 9 et le boîtier 10), on modifie l'angle de rotation de l'arbre 12. La Fig. 2 montre l'angle de pivotement maximum α. Cet angle de pivotement peut être modifié jusqu'à une valeur minimale, indiquée à la Fig. 2, c'est-à-dire l'angle de rotation β.

Dans ce cas, le point E se déplace jusqu 'à une position indiquée par E'. Cette modification de l'angle de rotation modifie dans les mêmes proportions l'angle de rotation de l'arbre 12 de l'organe d'obturation 11 de la vanne 13, ce qui modifie le coefficient de débit nominal du robinet ou de la vanne 13; cette variation d'angle modifie également le couple de manoeuvre F1 ou F2 sur l'arbre 12, et ceci sans modifier les propriétés, soit la course nominale cn, de l'organe d'actionnement 1.

## Revendications

1. Combinaison d'une vanne (13) comportant un élément de fermeture (11) actionné par un arbre rotatif (12), ledit arbre étant réglable pour positionner sélectivement l'élément de fermeture pour réaliser le débit désiré passant dans ladite vanne, et un organe de commande (1) fonctionnant sur une course convenable pour modifier le réglage dudit arbre, ledit organe (1) étant relié audit arbre (12) par un premier (2) et un second (6) levier pouvant fonctionner pour transformer une course donnée dudit organe de commande en un déplacement fonctionnel dudit arbre, ledit premier levier (2) avant une extrémité (en 3) couplée de manière rotative audit organe de commande (1), un axe de rotation (4) étant monté du côté de son autre extrémité et couplé de manière rotative, au point E par un moyen de couplage, audit second levier (6), ledit second levier (6) ayant une extrémité reliée audit arbre (12), caractérisée en ce que ledit moyen de couplage comporte des moyens à glissière pour modifier la position réelle dudit point E, une extrémité dudit second levier (6) étant fixée audit arbre (12) pour tourner avec lui, ledit moyen de couplage entraînant ledit second levier (6) en déplacement angulaire, de manière que ledit arbre (12) et ledit élément de fermeture (11) soient, à leur tour, réglables angulairement par ledit second levier pour choisir le débit désiré alors que la course dudit organe de commande (1) reste inchangée.

## Patentansprüche

1. Anordnung, umfassend einen Schieber (13), der ein Schließelement (11) enthält, welches durch eine Drehspindel (12) angetrieben wird, die für auswählbare Positionen des Schließelementes einstellbar ist, um den gewünschten Durchfluß durch den besagten Schieber hindurch zu realisieren, und ein Antriebsorgan (1), welches durch eine passende Hubbewegung eine Aenderung der Einstellung der besagten Spindel bewirkt, indem das besagte Organ (1) mit der besagten Spindel (12) über einen ersten Hebel (2) und einen zweiten Hebel (6) verbunden ist, die einen vorgegebenen Hub des besagten Antriebsorgans in eine funktionelle Verstellung der besagten Spindel umwandeln können, wobei der erste Hebel (2) an dem einen Ende (in 3) schwenkbar mit dem besagten Antriebsorgan (1) verbunden ist, an seinem anderen Ende in einer Schwenkachse (4) gelagert ist und am Punkt E über ein Kopplungsmittel schwenkbar mit dem besagten zweiten Hebel (6) gekoppelt ist, und wobei der besagte zweite Hebel (6) an einem Ende mit der besagten Spindel (12) verbunden ist, dadurch gekennzeichnet, daß besagtes Kopplungsmittel eine Gleitbahn zum Ändern der tatsächlichen Position des besagten Punktes E beinhaltet, ein Ende des besagten zweiten Hebels (6) an der besagten Spindel (12) befestigt ist, um sich mit dieser zu drehen, und das besagte Kopplungsmittel den besagten zweiten Hebel (6) derart in eine winkelmäßige Verstellung mitnimmt, daß die Drehbewegung der besagten Spindel (12) und des besagten Schließelements (11) winkelmäßig durch den besagten zweiten Hebel stellbar ist, um den gewünschten Durchfluß zu erhalten, wenn der Hub des besagten Antriebsorgans (1) unverändert bleibt.

## Claims

1. A combination of a valve (13) comprising a shutter member (11) actuated by a rotary axle (12), said axle being adjustable for selectively positioning the shutter element for effecting the required flow passing through said valve, and a control means (1) acting in a suitable path so as to alter the adjustment of said axle, said means (1) being linked to said axle (12) by a first (2) and a second (6) lever which can serve to transform a given path of the said control means into a functional movement of said axle, said first lever (2) having one end (at 3) rotatively coupled to said control means (1), an axis of rotation (4) being mounted at its other end and rotatively coupled, by a coupling means at point E, to said second lever (6), said second lever (6) having one end connected to said axle (12), characterised in that said coupling means includes guiding means for altering the actual position of said point E, one end of said second lever (6) being fixed to said axle (12) so as to turn with same, said coupling means entraining said second lever (6) into angular displacement, in such a way that said axle (12) and said shutter member (11) in their turn are angularly adjustable by said second lever for selecting the required flow while the path of said control means (1) remains unchanged.
